# EUROPÄISCHE PATENTSCHRIFT

(11) **EP 3 459 731 B1**
(45) Veröffentlichungstag und Bekanntmachung des Hinweises auf die Patenterteilung: **20.05.2020**
(21) Anmeldenummer: 18194070.1
(22) Anmeldetag: 12.09.2018
(51) Int. Cl.: B32B 17/10

(54) **VERBUNDSCHEIBE FÜR EIN KRAFTFAHRZEUG UND KRAFTFAHRZEUG MIT WENIGSTENS EINER VERBUNDSCHEIBE**
LAMINATED GLASS SHEET FOR A MOTOR VEHICLE AND MOTOR VEHICLE WITH AT LEAST ONE LAMINATED GLASS SHEET
VITRE FEUILLETÉE POUR UN VÉHICULE AUTOMOBILE ET VÉHICULE AUTOMOBILE POURVU D'AU MOINS UNE VITRE FEUILLETÉE

(30) Priorität: 21.09.2017 DE 102017009116
(43) Veröffentlichungstag der Anmeldung: 27.03.2019
(73) Patentinhaber: AUDI AG, 85045 Ingolstadt (DE)
(72) Erfinder: Gassmann, Lothar, 74177 Bad Friedrichshall (DE); Kühl, Elmar, 74239 Hardthausen (DE); Matthai, Annegret, 85296 Rohrbach (DE); Kerkhof, Filip, 8800 Roeselare (BE); De Schepper, Jurgen, 8610 Handzame (BE); Steyaert, Francis, 9940 Ertvelde (BE)

(56) Entgegenhaltungen:
- DE-U1- 29 716 365
- US-A- 2 552 955
- US-A1- 2005 144 862
- US-A1- 2007 051 452

## Beschreibung

Die Erfindung betrifft eine Verbundscheibe für ein Kraftfahrzeug, welche einen Haltebereich zum Halten der Verbundscheibe am Kraftfahrzeug aufweist, welche wenigstens zwei Scheibenelemente, sowie zumindest ein Folienelement umfasst, welches zwischen den wenigstens zwei Scheibenelementen angeordnet ist, und eine, den Haltebereich zumindest bereichsweise umgebende Ausnehmung aufweist. Ein zweiter Aspekt der Erfindung betrifft ein Kraftfahrzeug mit wenigstens einer Verbundscheibe.

Verbundscheiben, welche auch als Verbundsicherheitsglas bezeichnet werden können, sind meist aus mehreren Scheibenelementen gebildet, zwischen welchen zumindest eine zähelastische Folie angeordnet sein kann. Durch diese Anordnung sind Verbundscheiben im Vergleich zu konventionellen Glasscheiben besonders schalldämmend und durchschlaghemmend. Im Falle einer Scheibenbeschädigung besteht bei derartigen Verbundscheiben zudem eine deutlich geringere Gefahr einer Verletzung durch Scheibensplitter als bei konventionellen Glasscheiben.

Die US 2005/0144862 A1 beschreibt ein laminiertes Fenster für einen Fensteröffnungsmechanismus, welches eine erste Glasschicht und eine zweite Glasschicht, die mit der ersten Glasschicht durch einen Klebstoff verbunden ist, umfasst. Der Klebstoff definiert einen Abstand zwischen der ersten und der zweiten Glasschicht. Ein Eingriffsmodul weist einen Abschnitt auf, der in dem Abstand zwischen der ersten und der zweiten Glasschicht befestigt ist, wobei das Eingriffsmodul mit dem Fensteröffnungsmechanismus verbunden ist.

Aufgabe der vorliegenden Erfindung ist es, eine besonders formbeständige und insbesondere druckbeständige Verbundscheibe bereitzustellen.

Diese Aufgabe wird durch die Gegenstände der unabhängigen Patentansprüche gelöst. Vorteilhafte Weiterbildungen der Erfindung ergeben sich durch die Merkmale der abhängigen Patentansprüche.

Ein erster Aspekt der Erfindung betrifft eine Verbundscheibe für ein Kraftfahrzeug. Die Verbundscheibe weist einen Haltebereich zum Halten der Verbundscheibe am Kraftfahrzeug auf. Zudem umfasst die Verbundscheibe wenigstens zwei Scheibenelemente, sowie zumindest ein Folienelement, welches zwischen den wenigstens zwei Scheibenelementen angeordnet ist, und eine, den Haltebereich zumindest bereichsweise umgebende Ausnehmung aufweist. Das zumindest eine Folienelement kann mit den jeweiligen Scheibenelementen verklebt sein.

Des Weiteren umfasst die Verbundscheibe wenigstens ein temperaturbeständiges Versteifungselement, welches eine höhere Temperaturbeständigkeit aufweist als das zumindest eine Folienelement, welches in der Ausnehmung angeordnet ist und den Haltebereich wenigstens bereichsweise umgibt. Dies ist von Vorteil, da die Verbundscheibe hierdurch besonders formbeständig und insbesondere druckbeständig ist. Das Folienelement kann durch das Versteifungselement auf besonders günstige Weise auch bei Ausübung von Klemmkräften und zusätzlich oder alternativ von Verstellkräften an dem Haltebereich selbst bei hohen Umgebungstemperaturen vor ungünstiger, beispielsweise ein Fließen des Folienelements bewirkender, Kraftbeaufschlagung geschützt werden. Dadurch, dass das Fließen des Folienelements unterbunden werden kann, kann auch die Gefahr eines, durch das Ausüben der Klemmkräfte und zusätzlich oder alternativ der Verstellkräfte bedingten Scheibenbruchs der Verbundscheibe besonders gering gehalten werden. Unter "Fließen" ist dabei ein irreversibles Verformen nach Überschreiten einer Fließgrenze (hier: des Folienelements) zu verstehen. Das Versteifungselement kann beispielsweise aus organischem Material, beispielsweise Kunststoff, aus anorganischem Material oder aus Metall gebildet sein.

Mit höherer Temperaturbeständigkeit wird eine umso höhere Formbeständigkeit der Verbundscheibe bei höheren Temperaturen erzielt. Je höher die Temperaturbeständigkeit ist, desto steifer ist das Versteifungselement bei hohen Temperaturen.

Das temperaturbeständige Versteifungselement kann vorzugsweise als Kunststoffplatte, insbesondere als drucksteife Kunststoffplatte, ausgebildet sein. Dadurch kann das temperaturbeständige Versteifungselement - im Gegensatz zum Folienelement - auf besonders günstige Weise zur zumindest lokalen, druckstabilen Versteifung der Verbundscheibe beitragen und der Verbundscheibe somit eine besonders hohe Formstabilität bzw. Druckstabilität verleihen. Das temperaturbeständige Versteifungselement kann auch als temperaturbeständiger Kunststoffeinleger bezeichnet werden.

Das temperaturbeständige Versteifungselement kann vorzugsweise eine höhere Festigkeit, insbesondere Druckfestigkeit, als das zumindest eine Folienelement aufweisen. Dadurch kann das Fließen des Folienelements besonders zuverlässig vermieden werden.

Darunter, dass die Ausnehmung den Haltebereich zumindest bereichsweise umgibt ist zu verstehen, dass sich die Ausnehmung über den Haltebereich erstrecken kann. Mit anderen Worten kann sich der Haltebereich innerhalb der Ausnehmung befinden. Das zumindest eine Folienelement kann den Haltebereich durch zumindest einen, die Ausnehmung begrenzenden Ausnehmungsrand wenigstens bereichsweise, vorzugsweise vollständig umgreifen.

Dadurch, dass das temperaturbeständige Versteifungselement in der Ausnehmung angeordnet ist, kann das temperaturbeständige Versteifungselement ebenso wie das zumindest eine Folienelement zwischen den wenigstens zwei Scheibenelementen angeordnet sein.

Ein weiterer Vorteil besteht darin, dass durch das temperaturbeständige Versteifungselement eine flexible Werkstoffwahl für das Folienelement ermöglicht ist. Mit anderen Worten ermöglicht das temperaturbeständige Versteifungselement eine im Vergleich zu aus dem Stand der Technik bekannten Verbundsicherheitsgläsern besonders freie Folienwerkstoffwahl für das Folienelement. Bei hohen Temperaturen kann es je nach Folienwerkstoff des Folienelements zum mehr oder weniger stark ausgeprägten kraft- und temperaturbedingten Fließen des Folienelements kommen. Das temperaturbeständige Versteifungselement ermöglicht das Aufwenden der Klemmkräfte bzw. Verstellkräfte an dem Haltebereich, wobei jedoch die Klemmkräfte bzw. Verstellkräfte durch das Versteifungselement aufgenommen werden und das Fließen des Folienelements somit vermieden werden kann. Wird beispielsweise eine Klemmkraft an dem Haltebereich aufgewendet, so kann durch das Versteifungselement selbst bei hohen Umgebungstemperaturen ein Fließen und damit ein bereichsweises Herauspressen des Folienelements an einem Randbereich der Verbundscheibe verhindert werden.

Das zumindest eine Folienelement kann in vorteilhafter Weise eine Foliendicke zwischen 0,5 mm und 2 mm, bevorzugt 0,5 mm bis 1,0 mm und besonders bevorzugt 0,74 mm bis 0,81 mm aufweisen. Dies ist von Vorteil, da Foliendicken in diesem Bereich ausreichend sind, um jeweilige physikalische Eigenschaften des zumindest einen Folienelements wirksam in dessen Einsatz in der Verbundscheibe zur Geltung kommen zu lassen. Gleichzeitig wiegen Folienelemente mit derartigen Foliendicken besonders wenig.

Die wenigstens zwei Scheibenelemente können bevorzugt unterschiedliche Scheibendicken aufweisen. Dadurch besteht eine besonders hohe Gestaltungsfreiheit bei der Herstellung der Verbundscheibe. Insbesondere können die Scheibendicken beliebig gewählt werden.

Das zumindest eine Folienelement kann bevorzugt als besonders hochfestes DG41-Folienelement mit beispielsweise einer Foliendicke von 0,76 mm ausgebildet sein, um nur ein Beispiel zu nennen.

Vorzugsweise umgibt die Ausnehmung den Haltebereich vollständig, wodurch das Folienelement besonders weitreichend vor unzulässiger Krafteinwirkung geschützt werden kann.

Das Folienelement kann vorzugsweise ein Schubmodul größer als 150 Newton pro Quadratmillimeter, insbesondere größer als 200 Newton pro Quadratmillimeter, aufweisen. Dadurch ist die Verbundscheibe auch bei starker Scherkraftbeanspruchung besonders formstabil.

In vorteilhafter Weise kann das Folienelement eine Abmessung in einem Bereich von 5 Millimeter bis 500 Millimeter aufweisen. Mit anderen Worten kann das Folienelement eine Ausdehnung zwischen 5 Millimeter und 500 Millimeter aufweisen. Dadurch ergibt sich der Vorteil, dass das Folienelement je nach Bedarf unterschiedlich ausgelegt und angepasst werden kann. So kann das Folienelement eine Ausdehnung von 70 Millimeter oder von 400 Millimeter aufweisen, um nur einige Beispiele zu nennen. In vorteilhafter Weise kann das Folienelement eine Foliendicke in einem Bereich von 0,1 Millimeter und 2 Millimeter aufweisen. Unter den Bereichsgrenzen "0,1 Millimeter bis 2 Millimeter" werden insbesondere 0,1 Millimeter, 0,2 Millimeter, 0,3 Millimeter, 0,4 Millimeter, 0,5 Millimeter, 0,6 Millimeter, 0,7 Millimeter, 0,8 Millimeter, 0,9 Millimeter, 1 Millimeter, 1,1 Millimeter, 1,2 Millimeter, 1,3 Millimeter, 1,4 Millimeter, 1,5 Millimeter, 1,6 Millimeter, 1,7 Millimeter, 1,8 Millimeter, 1,9 Millimeter und 2 Millimeter verstanden. Auch andere Bereichsabstufungen im zehntel oder hundertstel Millimeterbereich können denkbar sein. In Vorteilhafter Weise kann neben der Ausdehnung des Folienelements und der Foliendicke des Folienelements auch dessen geometrische Form oder Kontur und Folienelementbreite, welche sich parallel zu den jeweiligen Scheibenelementen erstrecken kann, angepasst oder ausgelegt werden.

Bevorzugt kann das zumindest eine Folienelement als Akustikfolienelement und/oder als Farbfolienelement ausgebildet sein. Dies ist von Vorteil da ein Akustikfolienelement einen besonders wirksamen und einfachen Schallschutz und ein Farbfolienelement beispielsweise einen einfachen und wirksamen Schutz vor intensivem Lichteinfall in einen Fahrzeuginnenraum gewährleisten können. Ein derartiges Farbfolienelement kann beispielsweise eine vorbestimmte oder veränderbare Trübung und zusätzlich oder alternativ eine vorbestimmte oder veränderbare Tönung aufweisen. Eine Veränderung der veränderbaren Trübung bzw. Tönung kann beispielsweise durch Sonneneinstrahlung oder Bestromung oder durch Temperaturänderung bewirkbar sein.

Des Weiteren umfasst die Verbundscheibe wenigstens zwei Verbindungselemente, von welchen ein erstes Verbindungselement das temperaturbeständige Versteifungselement an einem ersten Scheibenelement und von welchen ein zweites Verbindungselement das temperaturbeständige Versteifungselement an einem zweiten Scheibenelement der wenigstens zwei Scheibenelemente hält.

Dadurch kann das temperaturbeständige Versteifungselement besonders sicher zwischen den wenigstens zwei Scheibenelementen gehalten werden. Insbesondere ergibt sich dadurch ein besonders stabiler Verbund aus den Scheibenelementen, den Verbindungselementen und dem temperaturbeständigen Versteifungselement.

Vorzugsweise kann zumindest eines der wenigstens zwei Verbindungselemente als Klebeband oder als Klebstoffschicht ausgebildet sein.

Besonders bevorzugt weist zumindest eines der wenigstens zwei Verbindungselemente einen geschlossenzelligen Acrylat-Klebstoff auf. Dadurch kann eine besonders haltbare Verbindung geschaffen und somit der Verbundscheibe eine besonders hohe Formstabilität und Druckstabilität verliehen werden. Ein weiterer Vorteil des geschlossenzelligen Acrylat-Klebstoffs besteht darin, dass bei einer Herstellung der Verbundscheibe in einem Autoklav-Verfahren ein besonders aufwandsarmer Ausgleich von Biegungsabweichungen zwischen den wenigstens zwei Scheibenelementen ermöglicht ist.

Vorzugsweise weisen die Verbindungselemente jeweils eine Dicke von 0,13 mm auf. Dadurch tragen die Verbindungselemente besonders wenig auf. Bei einer derartigen Dicke der Verbindungselemente ist die Verbundscheibe selbst unter einem Einwirken von großen Scherkräften besonders formstabil.

Zudem weist die Verbundscheibe an dem Haltebereich eine Öffnung, zum Halten der Verbundscheibe an dem Kraftfahrzeug auf. Dies ist von Vorteil, da eine derartige Öffnung ein besonders sicheres Halten und Abstützen der Verbundscheibe in mehreren Raumrichtungen ermöglicht. In die Öffnung kann beispielsweise ein Stellelement einer Fensterhebervorrichtung eingreifen, um Haltekräfte, Klemmkräfte und zusätzlich oder alternativ Verstellkräfte an dem Haltebereich zu übertragen und die Verbundscheibe beispielsweise zu bewegen.

Gemäß der Erfindung erstreckt sich die Öffnung durch wenigstens eines der wenigstens zwei Scheibenelemente. Dies ist von Vorteil, da die Öffnung somit als Durchgangsöffnung durch das wenigstens eine Scheibenelement ausgebildet ist und somit ein besonders zuverlässiges Halten der Verbundscheibe an dem Kraftfahrzeug ermöglicht.

Bevorzugt erstreckt sich die Öffnung durch das temperaturbeständige Versteifungselement hindurch. Dadurch ist in vorteilhafter Weise eine direkte Kraftübertragung von Haltekräften, Klemmkräften und zusätzlich oder alternativ von Verstellkräften auf das Versteifungselement ermöglicht, wodurch die Scheibenelemente entlastet werden können und damit deren Bruchgefahr verringert werden kann.

Besonders bevorzugt erstreckt sich die Öffnung durch die wenigstens zwei Scheibenelemente und das temperaturbeständige Versteifungselement hindurch. Mit anderen Worten ist die Öffnung dann als sich durch die Verbundscheibe erstreckende Durchgangsöffnung ausgebildet. Dadurch ist eine besonders großflächige Kraftverteilung an dem Haltebereich ermöglicht, wodurch die Gefahr eines Scheibenbruchs besonders gering ist.

In einer vorteilhaften Weiterbildung der Erfindung ist das zumindest eine Folienelement wenigstens teilweise aus Polyvinylbutyral gebildet. Dies ist von Vorteil, da ein aus Polyvinylbutyral (kurz: PVB) gebildetes Folienelement besonders widerstandsfähig und damit hochfest ist. Damit eignet sich ein aus Polyvinylbutyral gebildetes Folienelement besonders gut zur Verstärkung beziehungsweise Versteifung der Verbundscheibe an dem Haltebereich und damit an einer Stelle, an welcher beispielsweise ein Stellelement einer Fensterhebervorrichtung des Kraftfahrzeugs angreifen kann um Verstellkräfte auszuüben und dadurch die Verbundscheibe zu bewegen.

In einer weiteren vorteilhaften Weiterbildung der Erfindung weist das temperaturbeständige Versteifungselement eine Temperaturbeständigkeit zwischen -40 °C und +90 °C auf. Dadurch ergibt sich der Vorteil, dass hohe Temperaturen und besonders niedrige Temperaturen sowie große Temperaturschwankungen keinen oder lediglich einen besonders geringen Einfluss auf die Eigenschaften, insbesondere die Formstabilität und Druckstabilität, der Verbundscheibe haben.

In einer weiteren vorteilhaften Weiterbildung der Erfindung ist das temperaturbeständige Versteifungselement aus wenigstens einem Polymethylmethacrylat und/oder aus wenigstens einem Polycarbonat gebildet. Polymethylmethacrylat (kurz: PMMA) ist erst jenseits von 100 °C plastisch verformbar und erweist dementsprechend eine besonders hohe Temperaturbeständigkeit auf. Polycarbonat (kurz: PC) weist eine besonders hohe Gebrauchstemperatur von über 125 °C auf und ist damit ebenfalls besonders temperaturbeständig.

Besonders bevorzugt ist das temperaturbeständige Versteifungselement zumindest teilweise aus Acrylnitril-Butadien-Styrol-Copolymer (kurz: ABS) gebildet. ABS schmilzt erst in einem Temperaturbereich von 220 bis über 250 °C und ist damit besonders temperaturbeständig.

In einer weiteren vorteilhaften Weiterbildung der Erfindung umfasst die Verbundscheibe zumindest ein Zusatzfolienelement, welches zwischen den wenigstens zwei Scheibenelementen in einem Abstand zu dem temperaturbeständigen Versteifungselement und koplanar zu dem zumindest einen Folienelement angeordnet ist. Das Zusatzfolienelement kann mit anderen Worten von der Aussparung beabstandet sein. Durch das Zusatzfolienelement kann in vorteilhafter Weise eine besonders einfache Änderung von Eigenschaften der Verbundscheibe erfolgen. Das Zusatzfolienelement kann beispielsweise als Akustikfolie ausgebildet sein, um nur ein Beispiel zu nennen.

Ein zweiter Aspekt der Erfindung betrifft ein Kraftfahrzeug mit wenigstens einer Verbundscheibe gemäß dem ersten Aspekt der Erfindung. Die wenigstens eine Verbundscheibe des Kraftfahrzeugs ist somit besonders formstabil und druckstabil.

In einer vorteilhaften Weiterbildung der Erfindung ist die Verbundscheibe bewegbar an dem Kraftfahrzeug gelagert. Dadurch kann die Verbundscheibe eine besonders hohe Funktionalität aufweisen.

Die Verbundscheibe kann unter Ausübung einer Verstellkraft bzw. unter Ausübung von Verstellkräften an dem Haltebereich bewegbar sein.

Zum Bewegen der Verbundscheibe kann beispielsweise ein Stellelement die Verstellkraft an dem Haltebereich ausüben. Das Stellelement kann einer Fensterhebervorrichtung des Kraftfahrzeugs zugeordnet sein.

Vorzugsweise kann das Stellelement die Verstellkraft direkt auf das temperaturbeständige Versteifungselement ausüben. Mit anderen Worten kann das Stellelement also direkt an dem temperaturbeständigen Versteifungselement angreifen. Dies ist von Vorteil, da ein unmittelbares Einwirken der Verstellkraft auf die Scheibenelemente dadurch vermieden und dadurch die Gefahr einer kraftbedingten Beschädigung der Scheibenelemente, beispielsweise in Form eines Scheibenbruchs, verringert werden kann.

Bevorzugt ist die Verbundscheibe als Seitenscheibe oder als Dachscheibe des Kraftfahrzeugs ausgebildet. Dies ist von Vorteil, da bei einer als Seitenscheibe oder als Dachscheibe ausgebildeten Verbundscheibe das Folienelement mit verschiedensten physikalischen Eigenschaften eingesetzt werden kann, wohingegen insbesondere bei einer Windschutzscheibe erhöhte Anforderungen an etwaige gesetzliche Vorschriften bestehen. So kann beispielsweise eine Seitenscheibe eine deutlich stärkere Tönung aufweisen, als eine Windschutzscheibe.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Verbundscheibe beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: eine Draufsicht auf eine Verbundscheibe, durch deren Scheibenelemente sich an einem Haltebereich eine Öffnung erstreckt;
- Fig. 2: eine schematische Schnittdarstellung der Verbundscheibe gemäß einer in Fig. 1 gezeigten Schnittlinie A-A, wobei gezeigt ist, dass die Verbundscheibe ein zwischen den Scheibenelementen angeordnetes Folienelement sowie ein, in einer Ausnehmung des Folienelements und an dem Haltebereich angeordnetes temperaturbeständiges Versteifungselement umfasst;
- Fig. 3: eine schematische Darstellung eines der Scheibenelemente der Verbundscheibe sowie des Folienelements, wobei die Ausnehmung kreissegmentförmig ausgebildet ist;
- Fig. 4: eine schematische Perspektivansicht auf das in der Ausnehmung angeordnete Versteifungselement; und
- Fig. 5: eine weitere schematische Perspektivansicht, welche den Zusammenbau der Verbundscheibe zeigt.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

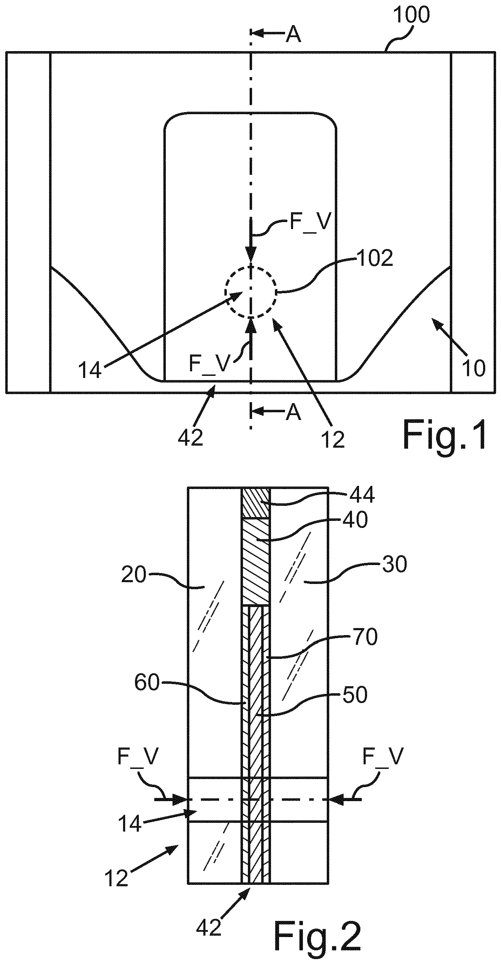

Fig. 1 zeigt ein vorliegend lediglich schematisch dargestelltes Kraftfahrzeug 100 mit einer bereichsweise dargestellten Verbundscheibe 10. Die Verbundscheibe 10 ist vorliegend als Seitenscheibe des Kraftfahrzeugs 100 ausgebildet und dementsprechend höhenverstellbar, also bewegbar an dem Kraftfahrzeug 100 gelagert.

Zur Bewegung der Verbundscheibe 10 kann an einem Haltebereich 12 mittels eines beispielsweise als Bolzen ausgebildeten, und in Fig. 1 schematisch und gestrichelt dargestellten Stellelements 102 eine Verstellkraft F_V ausgeübt werden. Hierzu kann das Stellelement 102 einer hier nicht weiter dargestellten Fensterhebervorrichtung zugeordnet sein. Das Stellelement 102 kann zur Ausübung der Verstellkraft F_V beispielsweise durch einen Aktuator der Fensterhebervorrichtung angetrieben werden.

Die Verbundscheibe 10 weist an dem Haltebereich 12 eine Öffnung 14 auf, an welcher die Verbundscheibe 10 an dem Kraftfahrzeug 100 gehalten und in welche das Stellelement 102 eingeführt ist, um die Verstellkraft F_V auszuüben. An dem Haltebereich 12 kann zudem eine in Fig. 2 dargestellte, senkrecht zur Verbundscheibe 10 orientierte Klemmkraft F_K wirken, welche beispielsweise mittels des Stellelement 102 auf die Verbundscheibe 10 ausgeübt ist, um das Stellelement 102 spielfrei mit der Verbundscheibe 10 zu verbinden.

Die Öffnung 14 erstreckt sich vorliegend durch die gesamte Verbundscheibe 10. Mit anderen Worten ist die Öffnung 14 als Durchgangsöffnung ausgebildet, welche sich durch den Haltebereich 12 erstreckt.

Die Verbundscheibe 10 umfasst vorliegend zwei Scheibenelemente 20, 30, also ein erstes Scheibenelement 20 und ein zweites Scheibenelements 30, welche in einer Schnittdarstellung der Verbundscheibe 10 gemäß einer, in Fig. 1 gezeigten Schnittlinie A-A in Fig. 2 erkennbar sind.

Das erste Scheibenelement 20 kann beispielsweise als eine, einem Fahrgastinnenraum zugewandte, Innenscheibe ausgebildet sein, wohingegen das zweite Scheibenelemente 30 als eine, einer Umgebung des Kraftfahrzeugs 100 zugewandte, Außenscheibe ausgebildet sein kann.

Die Verbundscheibe 10 umfasst zudem ein Folienelement 40, welches zwischen den zwei Scheibenelementen 20, 30 angeordnet ist, und eine, den Haltebereich 12 zumindest bereichsweise umgebende Ausnehmung 42 aufweist. Die Ausnehmung 42 kann, wie in Fig. 1 angedeutet ist, beispielsweise rechteckig ausgebildet sein. Das Folienelement 40 ist vorliegend aus Polyvinylbutyral, also mit anderen Worten als PVB-Folie, mit einer Foliendicke von 0,76 mm ausgebildet.

Fig. 2 zeigt, dass die Verbundscheibe 10 vorliegend des Weiteren ein Zusatzfolienelement 44 umfasst, welches zwischen den zwei Scheibenelementen 20, 30 in einem Abstand zu dem temperaturbeständigen Versteifungselement 50 und koplanar zu dem zumindest einen Folienelement 40 angeordnet ist. Das Zusatzfolienelement 44 ist vorliegend als Akustikfolie ausgebildet.

Um der Verbundscheibe 10 eine besonders hohe Formstabilität und Druckstabilität, insbesondere bei hohen Umgebungstemperaturen und gleichzeitiger Einwirkung der Klemmkraft F_K sowie der Verstellkraft F_V, zu verleihen, umfasst die Verbundscheibe 10 ein temperaturbeständiges Versteifungselement 50, welches eine höhere Temperaturbeständigkeit aufweist als das Folienelement 40. Das temperaturbeständige Versteifungselement 50 ist in der Ausnehmung 42 angeordnet und umgibt den Haltebereich 12 wenigstens bereichsweise. Das temperaturbeständige Versteifungselement 50 weist vorliegend eine Temperaturbeständigkeit zwischen -40 °C und +90 °C auf.

Das temperaturbeständige Versteifungselement 50 kann vorliegend flächenbündig mit dem Folienelement 40 zwischen den zwei Scheibenelementen 20, 30 angeordnet sein.

Das temperaturbeständige Versteifungselement 50 ist vorliegend aus einem Acrylnitril-Butadien-Styrol-Copolymer (kurz: ABS) gebildet und weist eine Versteifungselementdicke von vorliegend 0,5 mm auf.

Die Verbundscheibe 10 umfasst zudem zwei Verbindungselemente 60, 70, von welchen ein erstes Verbindungselement 60 das temperaturbeständige Versteifungselement 50 an dem ersten Scheibenelement 20 und von welchen ein zweites Verbindungselement 70 das temperaturbeständige Versteifungselement 50 an dem zweiten Scheibenelement 30 hält.

Die Verbindungselemente 60, 70 weisen vorliegend jeweils eine Verbindungselementdicke von 0,13 mm auf.

Ein Verbund aus den beiden Verbindungselementen 60, 70 und dem temperaturbeständigen Versteifungselement 50 weist im vorliegenden Ausführungsbeispiel insgesamt also eine Gesamtdicke von 0,76 mm auf, was der Foliendicke des Folienelements 40 entspricht.

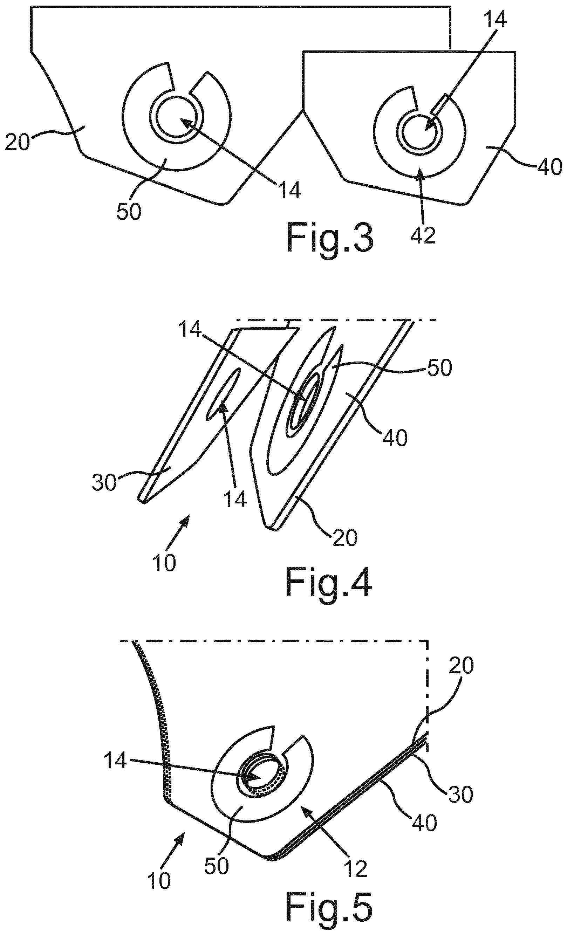

Fig. 3, Fig. 4 und Fig. 5 zeigen jeweils, dass die Ausnehmung 42 alternativ zu der in Fig. 1 gezeigten, rechteckigen Form auch ringsegmentförmig ausgestaltet sein kann.

Aus der Zusammenschau der Fig. 1, Fig. 3, Fig. 4 und Fig. 5 geht hervor, dass das temperaturbeständige Versteifungselement 50 allgemein eine zu der Ausnehmung 42 geometrische (im geometrischen Sinne) Ähnlichkeit, also eine geometrisch ähnliche Form, aufweisen kann.

Die Ausnehmung 42 kann allgemein neben der in Fig. 1 gezeigten Rechteckkontur auch eine Ringsegmentkontur aufweisen. Die Ringsegmentkontur der Ausnehmung 42 kann vorzugsweise konzentrisch zu der Öffnung 14 angeordnet sein, wodurch sich eine besonders homogene Krafteinleitung beim Ausüben der Klemmkraft F_K bzw. der Verstellkraft F_V ergibt.

Insgesamt zeigen die Beispiele, wie durch das temperaturbeständige Versteifungselement 50, welches in der Ausnehmung 42 angeordnet ist und den Haltebereich 12, welcher auch als Befestigungsbereich bezeichnet werden kann, umgibt, mit der Verbundscheibe 10 ein Verbundsicherheitsglas (kurz: VSG) geschaffen ist, bei welcher ein temperatur- und kraftbedingtes Fließen des Folienelements 40 zumindest weitgehend unterbunden werden kann. Mit anderen Worten kann das Fließen des Folienelements 40 und damit ein durch das Fließen bedingter Glasbruch der Verbundscheibe 10 selbst bei gleichzeitiger Wirkung der Kräfte F_K, F_V und hoher Umgebungstemperaturen von beispielsweise mehr als 50 °C, wirksam vermieden werden.

Das temperaturbeständige Versteifungselement 50, welches hinsichtlich dessen Größe und Form an die Kontur der Ausnehmung 42 angepasst sein kann, ermöglicht die gezielte Aufnahme der auf die Verbundscheibe 10 wirkenden Kräfte (Klemmkraft F_K, Verstellkraft F_V), wodurch eine Beschädigung der Verbundscheibe 10 wirksam vermieden werden kann.

Zusammenfassend kann die Verbundscheibe 10 (Verbundsicherheitsglas) das Innenglas (erstes Scheibenelemente 20) mit der Öffnung 14 in Form eines Lochs, insbesondere eines kreisrunden Lochs, und die auf dem Innenglas angeordnete Folie (Folienelement 40) umfassen, wobei die Folie mit der Ausnehmung 42 einen Ausschnitt (Aussparung) aufweisen kann, in welchem das temperaturbeständige Kunststoffteil 50 angeordnet sein kann. Das Loch (Öffnung 14) kann dabei von dem temperaturbeständigen Kunststoffteil 50 umgriffen sein. Das temperaturbeständige Kunststoffteil 50 kann allgemein in der Ausnehmung 42 der Folie auf dem Innenglas angebracht und von dem Außenglas (zweites Scheibenelemente 30) flächenbündig mit der Folie abgedeckt sein.

## Patentansprüche

1. Verbundscheibe (10) für ein Kraftfahrzeug (100), welche einen Haltebereich (12) zum Halten der Verbundscheibe (10) am Kraftfahrzeug (100) aufweist, welche wenigstens zwei Scheibenelemente (20, 30), sowie zumindest ein Folienelement (40) umfasst, welches zwischen den wenigstens zwei Scheibenelementen (20, 30) angeordnet ist, und eine, den Haltebereich (12) zumindest bereichsweise umgebende Ausnehmung (42) aufweist, wobei die Verbundscheibe (10) wenigstens ein temperaturbeständiges Versteifungselement (50) umfasst, welches eine höhere Temperaturbeständigkeit aufweist als das zumindest eine Folienelement (40), welches in der Ausnehmung (42) angeordnet ist und den Haltebereich (12) wenigstens bereichsweise umgibt, wobei die Verbundscheibe (10) wenigstens zwei Verbindungselemente (60, 70) umfasst, von welchen ein erstes Verbindungselement (60) das temperaturbeständige Versteifungselement (50) an einem ersten Scheibenelement (20) und von welchen ein zweites Verbindungselement (70) das temperaturbeständige Versteifungselement (50) an einem zweiten Scheibenelement (30) der wenigstens zwei Scheibenelemente (20, 30) hält, und wobei die Verbundscheibe (10) an dem Haltebereich (12) eine Öffnung (14), zum Halten der Verbundscheibe (10) an dem Kraftfahrzeug (100), aufweist,
**dadurch gekennzeichnet, dass**
sich die Öffnung (14) durch wenigstens eines der wenigstens zwei Scheibenelemente (20, 30) erstreckt.

2. Verbundscheibe (10) nach Anspruch 1,
**dadurch gekennzeichnet, dass**
das zumindest eine Folienelement (40) wenigstens teilweise aus Polyvinylbutyral gebildet ist.

3. Verbundscheibe (10) nach Anspruch 1 oder 2,
**dadurch gekennzeichnet, dass**
das temperaturbeständige Versteifungselement (50) eine Temperaturbeständigkeit zwischen -40 °C und +90 °C aufweist.

4. Verbundscheibe (10) nach einem der vorhergehenden Ansprüche,
**dadurch gekennzeichnet, dass**
das temperaturbeständige Versteifungselement (50) aus wenigstens einem Polymethylmethacrylat und/oder aus wenigstens einem Polycarbonat gebildet ist.

5. Verbundscheibe (10) nach einem der Ansprüche 1 bis 3,
**dadurch gekennzeichnet, dass**
das temperaturbeständige Versteifungselement (50) aus Acrylnitril-Butadien-Styrol-Copolymer gebildet ist.

6. Verbundscheibe (10) nach einem der vorhergehenden Ansprüche,
**dadurch gekennzeichnet, dass**
die Verbundscheibe (10) zumindest ein Zusatzfolienelement (44) umfasst, welches zwischen den wenigstens zwei Scheibenelementen (20, 30) in einem Abstand zu dem temperaturbeständigen Versteifungselement (50) und koplanar zu dem zumindest einen Folienelement (40) angeordnet ist.

7. Kraftfahrzeug (100) mit wenigstens einer Verbundscheibe (10) nach einem der Ansprüche 1 bis 6.

8. Kraftfahrzeug (100) nach Anspruch 7,
**dadurch gekennzeichnet, dass**
die Verbundscheibe (10) bewegbar an dem Kraftfahrzeug (100) gelagert ist.

## Claims

1. Composite pane (10) for a motor vehicle (100), which composite pane has a holding region (12) for holding the composite pane (10) on the motor vehicle (100), and comprises at least two pane elements (20, 30) and at least one film element (40), and is arranged between the at least two pane elements (20, 30) and has a recess (42) surrounding the holding region (12) at least in regions, wherein the composite pane (10) comprises at least one temperature-resistant stiffening element (50), which has a higher temperature resistance than the at least one film element (40), and is arranged in the recess (42) and at least partially surrounds the holding region (12), wherein the composite pane (10) comprises at least two connecting elements (60, 70), of which a first connecting element (60) holds the temperature-resistant stiffening element (50) on a first pane element (20) and of which a second connecting element (70) holds the temperature-resistant stiffening element (50) on a second pane element (30) of the at least two pane elements (20, 30), and wherein the composite pane (10) has an opening (14) on the holding region (12) for holding the composite pane (10) on the motor vehicle (100),
**characterised in that**
the opening (14) extends through at least one of the at least two pane elements (20, 30).

2. Composite pane (10) according to claim 1,
**characterised in that**
the at least one film element (40) is at least partially formed from polyvinyl butyral.

3. Composite pane (10) according to claim 1 or 2,
**characterised in that**
the temperature-resistant stiffening element (50) has a temperature resistance of between -40 °C and +90 °C.

4. Composite pane (10) according to any of the preceding claims,
**characterised in that**
the temperature-resistant stiffening element (50) is formed from at least one polymethyl methacrylate and/or from at least one polycarbonate.

5. Composite pane (10) according to any of claims 1 to 3,
**characterised in that**
the temperature-resistant stiffening element (50) is formed from acrylonitrile-butadienestyrene copolymer.

6. Composite pane (10) according to any of the preceding claims,
**characterised in that**
the composite pane (10) comprises at least one additional film element (44) which is arranged between the at least two pane elements (20, 30) at a distance from the temperature-resistant stiffening element (50) and is arranged to be coplanar with the at least one film element (40).

7. Motor vehicle (100) having at least one composite pane (10) according to any of claims 1 to 6.

8. Motor vehicle (100) according to claim 7,
**characterised in that**
the composite pane (10) is movably mounted on the motor vehicle (100).

## Revendications

1. Vitre feuilletée (10) pour un véhicule automobile (100), laquelle comporte une zone de retenue (12) pour tenir la vitre feuilletée (10) au niveau du véhicule automobile (100), laquelle comprend au moins deux éléments vitres (20, 30) ainsi qu'au moins un élément feuille (40) qui est agencé entre les au moins deux éléments vitres (20, 30) et un évidement (42) entourant au moins par endroits la zone de retenue (12),
dans laquelle la vitre feuilletée (10) comprend au moins un élément de renfort (50) thermorésistant qui présente une plus grande résistance thermique que l'au moins un élément feuille (40), qui est agencé dans l'évidement (42) et entoure au moins par endroits la zone de retenue (12),
dans laquelle la vitre feuilletée (10) comprend au moins deux éléments de liaison (60, 70) dont un premier élément de liaison (60) tient l'élément de renfort (50) thermorésistant au niveau d'un premier élément vitre (20) et dont un deuxième élément de liaison (70) tient l'élément de renfort (50) thermorésistant au niveau d'un deuxième élément vitre (30) des au moins deux éléments vitres (20, 30)
et dans laquelle la vitre feuilletée (10) comporte au niveau de la zone de retenue (12) une ouverture (14) pour tenir la vitre feuilletée (10) au niveau du véhicule automobile (100),
**caractérisée en ce que** l'ouverture (14) s'étend à travers au moins l'un des au moins deux éléments vitres (20, 30).

2. Vitre feuilletée (10) selon la revendication 1, **caractérisée en ce que** l'au moins un élément feuille (40) est formé au moins en partie en polybutyral de vinyle.

3. Vitre feuilletée (10) selon la revendication 1 ou 2, **caractérisée en ce que** l'élément de renfort (50) thermorésistant présente une résistance thermique comprise entre -40 °C et +90 °C.

4. Vitre feuilletée (10) selon l'une quelconque des revendications précédentes, **caractérisée en ce que** l'élément de renfort (50) thermorésistant est formé en au moins un polyméthacrylate de méthyle et/ou en au moins un polycarbonate.

5. Vitre feuilletée (10) selon l'une quelconque des revendications 1 à 3, **caractérisée en ce que** l'élément de renfort (50) thermorésistant est formé en un copolymère d'acrylonitrile-butadiène-styrène.

6. Vitre feuilletée (10) selon l'une quelconque des revendications précédentes, **caractérisée en ce que** la vitre feuilletée (10) comprend au moins un élément feuille (44) supplémentaire qui est agencé entre les au moins deux éléments vitres (20, 30) à distance de l'élément de renfort (50) thermorésistant et de manière coplanaire par rapport à l'élément feuille (40).

7. Véhicule automobile (100) avec au moins une vitre feuilletée (10) selon l'une quelconque des revendications 1 à 6.

8. Véhicule automobile (100) selon la revendication 7, **caractérisé en ce que** la vitre feuilletée (10) est montée mobile au niveau du véhicule automobile (100).
